Europäisches Patentamt

**European Patent Office**

**Office européen des brevets**

(11) Numéro de publication: **0 234 647 B1**

# (12) FASCICULE DE BREVET EUROPEEN

(45) Date de publication de fascicule du brevet: **06.05.92**

(51) Int. Cl.⁵: **C03C 1/00**, C01B 13/32, C01G 25/02

(21) Numéro de dépôt: **87200228.2**

(22) Date de dépôt: **13.02.87**

---

(54) **Procédé de fabrication d'oxydes métalliques vitreux.**

---

(30) Priorité: **24.02.86 FR 8602618**

(43) Date de publication de la demande:
**02.09.87 Bulletin 87/36**

(45) Mention de la délivrance du brevet:
**06.05.92 Bulletin 92/19**

(84) Etats contractants désignés:
**AT BE CH DE ES FR GB GR IT LI LU NL SE**

(56) Documents cités:
**EP-A- 0 072 995**
**DE-B- 1 053 481**
**FR-A- 1 201 794**
**US-A- 4 275 052**
**US-A- 4 543 341**

(73) Titulaire: **SOLVAY**
**Rue du Prince Albert, 33**
**B-1050 Bruxelles(BE)**

(72) Inventeur: **Wautier, Henri**
**Rue Louis Catala 19**
**B-7490 Braine-le-Comte(BE)**
Inventeur: **Legrand, Franz**
**Rue des Vaches 71**
**B-7300 Ouaregnon(BE)**
Inventeur: **Lerot, Luc**
**Avenue du Centaure 31**
**B-1200 Bruxelles(BE)**

(74) Mandataire: **Anthoine, Paul et al**
**SOLVAY Département de la Propriété Indus-**
**trielle 310, rue de Ransbeek**
**B-1120 Bruxelles(BE)**

---

Rank Xerox (UK) Business Services
(3.08/2.18/2.0)

# Description

L'invention a pour objet la fabrication d'oxydes métalliques vitreux.

On connaît un procédé pour fabriquer des oxydes métalliques vitreux, selon lequel un alcoolate métallique est soumis à une hydrolyse. Ce procédé connu est habituellement dénommé "procédé sol-gel" (TREATISE ON MATERIALS SCIENCE AND TECHNOLOGY, Vol. 22, 1982, Academic Press. Inc. - S. SAKKA : "Gel Method for Making Glass", pages 129 à 167). Il implique généralement que l'hydrolyse soit opérée en milieu acide, pour éviter une précipitation de l'oxyde métallique (Ibidem : page 132); on préconise de réaliser une forte acidité dans le milieu réactionnel (pH compris entre 1 et 2,5), par addition d'acides minéraux tels que l'acide chlorhydrique ou l'acide nitrique (brevet US-A-4476156, colonne 4, ligne 65 à colonne 5, ligne 1).

On a fabriqué du titanate de plomb vitreux au moyen d'un procédé dans lequel on a d'abord fait réagir de l'isopropoxyde de titane avec de l'acétate de plomb en solution dans du méthoxyéthanol, on a dissous l'alcoolate résultant dans du méthoxyéthanol et on l'y a soumis à une hydrolyse au moyen d'une solution de méthoxyéthanol et d'eau contenant de l'acide nitrique (Ultrastruct. Process. Ceram. Glasses, Compos. (Proc. Int. Conf. (1984), pages 152-160). Dans ce procédé connu, la solution de méthoxyéthanol et d'eau mise en oeuvre contenait 0,002 mole $HNO_3$/mole d'eau; on insiste sur la nécessité impérieuse de mettre en oeuvre plus de 0,0005 mole $HNO_3$/mole d'eau (page 155).

La présence d'acides minéraux forts dans le milieu réactionnel est une source d'inconvénients. Elle est notamment une source d'impuretés dans le verre d'oxyde métallique, qui nuisent à sa transparence. Dans le cas où l'oxyde métallique vitreux est formé in situ sur un substrat, l'acide minéral risque d'engendrer une corrosion du substrat. La présence de l'acide minéral implique par ailleurs que le matériel utilisé pour la réaction d'hydrolyse soit construit en matériaux coûteux, résistant à la corrosion par les acides.

L'invention remédie à ces inconvénients en fournissant un procédé amélioré pour la fabrication d'oxydes métalliques vitreux, qui permet de s'affranchir de l'utilisation d'acides minéraux. On a en effet trouvé qu'en opérant une sélection judicieuse de l'alcoolate on peut s'affranchir d'un acide minéral, sans nuire aux caractéristiques de l'oxyde métallique vitreux.

En conséquence, l'invention concerne un procédé de fabrication d'oxydes métalliques vitreux, dans lequel on hydrolyse un alcoolate métallique; selon l'invention, on met en oeuvre un alcoolate dérivé d'un alcool dont le pKa est inférieur à 15,74, et on opère l'hydrolyse avec un milieu aqueux dont le pH est supérieur à 1,5..

Dans le procédé selon l'invention, l'alcoolate métallique désigne tout composé dans lequel un métal est relié à au moins un groupement hydrocarboné par l'intermédiaire d'un atome d'oxygène.

Conformément à l'invention, l'alcoolate est sélectionné parmi ceux dérivant d'un alcool dont le pKa est inférieur à 15,74, qui est la valeur généralement admise pour le pKa de l'eau pure (W. HUBER - "Titrations in nonaqueous solvents" - 1967 - Academic Press. - page 220, tableau 1.9).

Des alcoolates préférés sont ceux qui dérivent d'alcools dont le pKa n'excède pas 15,25, les valeurs comprises entre 12 et 15 étant spécialement recommandées.

Nonobstant la condition qui précède concernant le pKa, tous les alcools peuvent convenir pour la confection de l'alcoolate métallique. Dans le cadre de l'invention, il convient de conférer au terme alcool une acceptation tout à fait générale et y inclure les phénols (non substitués et substitués partiellement ou totalement), aussi bien que les alcools aliphatiques linéaires cycliques, saturés, insaturés, non substitués et substitués partiellement ou totalement. Les alcools aliphatiques sont spécialement recommandés, tels que, par exemple, les trifluoroéthanols.

Des alcoolates avantageux, conformément à l'invention sont ceux dérivés de composés de formule générale :

$$R - O - R'OH$$

dans laquelle R et R' désignent des groupements hydrocarbonés.

Les alkoxyalcoolates sont spécialement recommandés, tels que par exemple les méthoxyéthanolates.

L'hydrolyse a pour fonction de décomposer l'alcoolate au moyen d'eau, pour produire l'oxyde métallique hydraté et un alcool selon le mécanisme réactionnel suivant :

$$M(OR)_n + nH_2O \rightarrow M(OH)_n + nROH$$

$$M(OH)_n \rightarrow MO_{n/2} + n/2\ H_2O$$

dans lequel M et R désignent respectivement un métal et un groupement hydrocarboné.

Conformément à l'invention, on met en oeuvre, pour l'hydrolyse, un milieu aqueux dont le pH est supérieur à 1,5.

Le milieu aqueux peut être de l'eau telle quelle, par exemple une eau naturelle ou une eau industrielle qui a éventuellement subi des traitements de conditionnement tels que des traitements de clarification, d'adoucissement, de désionisation ou de distillation. Il peut éventuellement contenir des additifs tels que des acides minéraux, notamment des acides forts tels que les acides nitrique, chlorhydrique, phosphorique et sulfurique; le cas échéant la teneur en acide minéral dans le milieu aqueux doit toutefois être réglée pour que son pH reste supérieur à 1,5, de préférence au moins égal ou supérieur à 2. Dans le cas où le milieu aqueux contient des acides minéraux forts, on préconise que ceux-ci soient en quantités inférieures à 0,002 mole par mole d'eau du milieu aqueux, les quantités inférieures à 0,0005 mole par mole d'eau étant recommandées. Toutes autres choses étant égales, on préfère exécuter l'hydrolyse en absence d'acide minéral fort. En variante, l'hydrolyse peut éventuellement être exécutée en milieu basique.

L'hydrolyse est opérée dans des conditions réglées pour provoquer une gélification de l'oxyde métallique et éviter une précipitation. Elle peut être effectuée indifféremment avec un excès ou un défaut d'eau par rapport à la quantité strictement nécessaire pour décomposer la totalité de l'alcoolate. En règle générale, la quantité optimum d'eau qu'il convient de mettre en oeuvre dépend de divers paramètres, notamment de l'alcoolate métallique sélectionné et du profil recherché pour le gel qui peut par exemple être produit à l'état d'une masse gélifiée, de fibres ou d'une pellicule.

Le gel recueilli à l'issue de l'hydrolyse est soumis, de manière connue en soi, à un traitement thermique adéquat pour le convertir en verre. Les conditions du traitement thermique, notamment la température et la durée, dépendent de divers paramètres tels que la nature de l'oxyde métallique à produire et le profil recherché pour le gel. Ces conditions doivent être recherchées dans chaque cas particulier par un travail de routine au laboratoire.

Selon une forme de réalisation particulière du procédé selon l'invention, il s'est révélé avantageux que l'alcoolate métallique et l'eau destinée à l'hydrolyse soient mis en oeuvre à l'état de solutions organiques que l'on mélange pour réaliser l'hydrolyse.

Dans cette forme de réalisation du procédé selon l'invention, on peut utiliser des solvants organiques identiques ou différents pour l'alcoolate, d'une part, et pour l'eau, d'autre part. Dans le cas où l'alcoolate et l'eau sont dissous dans des solvants organiques différents, il convient généralement de choisir des solvants organiques miscibles. Les alcools et leurs dérivés conviennent généralement bien, notamment le méthanol, l'éthanol, le n-propanol, l'iso-propanol, le n-butanol, l'iso-butanol et les alkoxyalcools tels que le méthoxyéthanol.

Les taux de dilution optimum de l'alcoolate et de l'eau dans leurs solvants organiques respectifs dépendent de divers facteurs, notamment du métal, de l'alcoolate, des solvants, de la température de travail et du profil souhaité pour le gel; ils doivent être déterminés dans chaque cas particulier par un travail de routine au laboratoire.

Dans la mise en oeuvre de cette forme de réalisation de l'invention, il suffit généralement de dissoudre séparément l'alcoolate métallique et l'eau dans leurs solvants respectifs et de verser ensuite la solution organique d'eau dans la solution organique de l'alcoolate.

Dans un mode d'exécution particulier de cette forme de réalisation de l'invention, la solution organique de l'alcoolate métallique est une solution alcoolique que l'on obtient en dissolvant, dans un alcool dont le pKa est inférieur à 15,74, un alcoolate dérivé d'un alcool dont le pKa est supérieur à 15,74. Dans ce mode d'exécution particulier de l'invention, les alcools à pKa respectivement inférieur et supérieur à 15,74 peuvent appartenir à la classe comprenant les phénols non substitués, les phénols substitués partiellement ou totalement et les alcools à groupements aliphatiques linéaires, cycliques, saturés, insaturés, non substitués et substitués partiellement ou totalement. Toutes autres choses restant égales, on préfère sélectionner l'alcool dont le pKa est inférieur à 15,74 parmi les éther-alcools de formule générale :

R - O - R'OH

dans laquelle R et R' désignent des groupements hydrocarbonés.

Des éther-alcools préférés sont ceux dans lesquels les groupements R et R' sont des groupements aliphatiques saturés tels que, par exemple, les groupements méthyl, éthyl, n-propyl, iso-propyl, n-butyl et iso-butyl; des exemples de tels éther-alcools sont l'éthoxyéthanol, le méthoxyéthanol et l'isobutoxyéthanol.

Dans le mode d'exécution de l'invention qui vient d'être décrit, l'alcool dont le pKa est supérieur à 15,74 peut avantageusement être sélectionné parmi les alcools aliphatiques saturés.

Dans ce mode d'exécution de l'invention, le taux de dilution de l'alcoolate dans l'alcool dont le pKa est inférieur à 15,74 doit être suffisant pour que l'hydrolyse conduise à une gélification sans précipitation d'oxyde métallique. En pratique il n'y a toutefois pas intérêt à exagérer le taux de dilution; le taux de dilution optimum dépend de plusieurs paramètres parmi lesquels figurent le métal, les alcools, la température de travail et le profil recherché pour le gel. Il doit être recherché dans chaque cas particulier.

Dans la mise en oeuvre du mode d'exécution de l'invention qui vient d'être décrit, on prépare une solution organique d'eau, on dissout, dans un alcool dont le pKa est inférieur à 15,74, un alcoolate dérivé d'un alcool dont le pKa est supérieur à 15,74 et on verse la solution organique d'eau dans la solution alcoolique de l'alcoolate.

Une particularité spécialement avantageuse du procédé selon l'invention réside dans la possibilité d'exécuter l'hydrolyse en absence d'acide minéral, sans risque de précipitation.

Le procédé selon l'invention trouve notamment une application intéressante pour la production d'oxydes de métaux des groupes III a et b et IV a et b du tableau périodique des éléments, (version américaine adoptée par Chemical Abstracts) par hydrolyse d'alcool de ces métaux; il trouve une application spécialement avantageuse pour la production de verres d'oxydes métalliques difficilement vitrifiables qui, dans les procédés sol-gel antérieurs à l'invention, impliquaient obligatoirement la mise en oeuvre d'acides minéraux forts tels que les acides nitrique et chlorhydrique. L'invention s'applique ainsi avantageusement à la production de verres formés d'oxyde de zirconium, d'oxyde d'aluminium, d'oxyde de bore et de mélanges de ces oxydes entre eux ou avec d'autres oxydes métalliques.

Les quelques exemples dont la description va suivre servent à illustrer l'invention.

Dans chacun de ces exemples on a préparé séparément :
- d'une part, une solution organique comprenant au moins un alcoolate métallique;
- d'autre part, une solution organique d'eau.

La solution organique d'eau a ensuite été versée dans la solution organique d'alcoolate en quantité adéquate pour former un oxyde métallique hydraté par hydrolyse de l'alcoolate métallique.

Première série d'essais (de référence)

Les exemples 1 et 2 dont la description va suivre concernent des essais dans lesquels la solution organique d'alcoolate métallique a été préparée exclusivement à partir d'alcools dont le pKa est supérieur à 15,74.

Exemple 1

La solution organique d'alcoolate métallique a été obtenue en diluant 0,1 mole de n-propoxyde de zirconium dans 80 ml d'éthanol. L'opération a été exécutée à l'abri de l'humidité, dans une enceinte maintenue sous une atmosphère d'azote sec. A la solution organique résultante, on a ajouté 4,82 ml d'acide nitrique à 70 %, de manière à réaliser un rapport molaire HNO$_3$:Zr égal à 0,75.

La solution organique d'eau a été obtenue en diluant 3,4 ml d'eau distillée dans 72 ml d'éthanol.

La solution organique d'eau a été versée dans la solution de l'alcoolate maintenue sous agitation, à la température ambiante.

Après 1 heure de murissage à température ambiante, le milieu réactionnel s'est figé à l'état d'un gel.

Exemple 2

La solution organique d'alcoolate métallique a consisté en une solution 0,2 molaire de n-butoxyde de zirconium dans de l'éthanol, sans acide minéral.

La solution organique d'eau a consisté en une solution 0,7 molaire d'eau distillée dans de l'éthanol.

Les deux solutions ont été mélangées à 25°C, en opérant comme à l'exemple 1. A l'issue d'environ 20 secondes de mélange, un précipité est apparu, sans formation d'un gel.

Les exemples 1 et 2 montrent que, dans le cas où les solutions d'alcoolates métalliques sont obtenues à partir d'alcools dont le pKa est supérieur à 15,74, il est nécessaire d'y ajouter un acide minéral fort pour que l'hydrolyse donne lieu à la formation d'un gel.

Seconde série d'essais (conformes à l'invention)

Les exemples 3 à 5 dont la description suit concernent des essais dans lesquels les solutions organiques d'alcoolates métalliques ont été préparées à partir d'alcools dont le pKa est inférieur à 15,74.

Exemple 3

La solution organique d'alcoolate métallique a été obtenue en dissolvant du n-butoxyde de zirconium dans du 2,2,2-trifluoroéthanol (pKa = 12,37), à raison de 0,2 mole de n-butoxyde de zirconium par litre de solution.

La solution organique d'eau a consisté en une solution 0,7 molaire d'eau distillée dans du 2,2,2-trifluoroéthanol. On a mesuré son pH apparent par une méthode électrochimique utilisant une électrode de verre combinée à une électrode Ag/AgCl, de marque Metrohm, n°6.024.100 : pH = 5,6.

La solution organique d'eau a été versée dans la solution organique d'alcoolate maintenue sous agitation, à 25°C.

A l'issue d'un temps de murissage de quelques jours à la température ambiante dans un moule ouvert, le mélange réactionnel s'est figé à l'état d'un gel transparent.

Exemple 4

La solution organique d'alcoolate métallique a été obtenue en dissolvant 0,1 mole de n-propoxyde de zirconium dans 80 ml de méthoxy-2-éthanol 1 (pKa = 14,80), dans un réacteur maintenu sous une atmosphère d'azote anhydre.

La solution organique d'eau a été obtenue en dissolvant 5,4 ml d'eau distillée dans 72 ml de méthoxy-2-éthanol 1. On a mesuré son pH apparent comme à l'exemple 3 : pH = 8,2.

La solution organique d'eau a été versée en totalité dans la solution organique d'alcoolate maintenue sous agitation à la température ambiante.

A l'issue d'un temps de murissage de 15 minutes, le milieu réactionnel s'est figé à l'état d'un gel transparent.

Les exemples 3 et 4 montrent que, lorsqu'on sélectionne un alcool à pKa inférieur à 15,74 pour la solution organique de l'alcoolate métallique, il n'est plus nécessaire d'y ajouter un acide minéral pour obtenir un gel par hydrolyse.

Exemple 5

La solution organique d'alcoolate métallique a été obtenue en dissolvant du butylate secondaire d'aluminium dans du méthoxy-2-éthanol-1, à raison de 0,5 mole de butylate d'aluminium par litre de solution.

La solution organique d'eau a été obtenue en diluant 0,4 ml d'eau distillée dans 19,6 ml de propanol. On a mesuré son pH apparent, comme à l'exemple 3 : pH = 7,8.

On a mis en oeuvre 30 ml de la solution organique d'alcoolate, préchauffée à 60°C, et on y a versé lentement la totalité de la solution organique d'eau. Le mélange résultant a été versé dans un moule que l'on a introduit dans une étuve où on a fait régner une température de 60°C. Dans l'étuve le moule a été maintenu ouvert pour permettre une évaporation des solvants. Le mélange réactionnel s'est figé en un gel transparent.

**Revendications**

1. Procédé de fabrication d'oxydes métalliques vitreux, selon lequel on hydrolyse un alcoolate métallique pour former un gel, caractérisé en ce qu'on met en oeuvre un alcoolate dérivé d'un alcool dont le pKa est inférieur à 15,74, et on opère l'hydrolyse avec un milieu aqueux dont le pH est supérieur à 1,5.

2. Procédé selon la revendication 1, caractérisé en ce qu'on met en oeuvre un alcoolate dérivé d'un alcool dont la valeur du pKa est, au maximum, égale à 15,25, et on opère l'hydrolyse avec un milieu aqueux dont le pH est au moins égal à 2.

3. Procédé selon la revendication 2, caractérisé en ce qu'on sélectionne un alcoolate dérivé d'un alcool dont la valeur du pKa est comprise entre 12 et 15.

4. Procédé selon l'une quelconque des revendications 1 à 3, caractérisé en ce qu'on sélectionne l'alcoolate métallique parmi les alcoolates des métaux des groupes III a et b et IV a et b du tableau périodique des éléments (version américaine adoptée par Chemical Abstracts).

5. Procédé selon l'une quelconque des revendications 1 à 4, caractérisé en ce qu'on sélectionne l'alcoolate parmi ceux dérivés de composés de formule générale :

R - O - R'OH,

dans laquelle R et R' désignent des groupements hydrocarbonés.

6. Procédé selon la revendication 5, caractérisé en ce qu'on sélectionne l'alcoolate parmi les alkoxyalcoolates.

7. Procédé selon l'une quelconque des renvendications 1 à 6, caractérisé en ce que, pour hydrolyser l'alcoolate métallique, on verse une solution organique d'eau dans une solution organique de l'alcoolate métallique.

8. Procédé selon la revendication 7, caractérisé en ce que la solution organique de l'alcoolate métallique est une solution alcoolique.

9. Procédé selon la revendication 8, caractérisé en ce que, pour la mise en oeuvre de la solution alcoolique de l'alcoolate, on dissout dans un alcool dont le pKa est inférieur à 15,74, un alcoolate dérivé d'un alcool dont le pKa est supérieur à 15,74.

10. Procédé selon la revendication 9, caractérisé en ce que l'alcool dont le pKa est inférieur à 15,74 est sélectionné parmi les éther-alcools de formule générale :

R - O - R'OH

dans laquelle R et R' désignent des groupements hydrocarbonés.

**11.** Procédé selon la revendication 10, caractérisé en ce qu'on sélectionne un éther-alcool dans lequel les groupements R et R' sont des groupements aliphatiques saturés et on sélectionne l'alcool dont le pKa est supérieur à 15,74, parmi les alcools aliphatiques saturés.

**12.** Procédé selon l'une quelconque des revendications 9 à 11, caractérisé en ce qu'on prépare une solution organique d'eau, on dissout dans un alcool dont le pKa est inférieur à 15,74, un alcoolate dérivé d'un alcool dont le pKa est supérieur à 15,74, et on verse la solution organique d'eau dans la solution alcoolique de l'alcoolate.

**13.** Procédé selon l'une quelconque des revendications 1 à 12, caractérisé en ce qu'on exécute l'hydrolyse avec de l'eau contenant entre 0 et 0,0005 mode d'acide minéral par mode d'eau.

**Claims**

**1.** Process for the manufacture of vitreous metal oxides, according to which a metal alcoholate is hydrolysed to form a gel, characterised in that an alcoholate derived from an alcohol the pKa of which is less than 15.74 is employed, and the hydrolysis is carried out with an aqueous medium the pH of which is greater than 1.5.

**2.** Process according to Claim 1, characterised in that an alcoholate derived from an alcohol the pKa value of which is not greater than 15.25 is employed, and the hydrolysis is carried out with an aqueous medium the pH of which is at least equal to 2.

**3.** Process according to Claim 2, characterised in that an alcoholate derived from an alcohol the pKa value of which is between 12 and 15 is chosen.

**4.** Process according to any one of Claims 1 to 3, characterised in that the metal alcoholate is chosen from amongst the alcoholates of metals of groups III a and b and IV a and b of the Periodic Table of the Elements (American version adopted by Chemical Abstracts).

**5.** Process according to any one of Claims 1 to 4, characterised in that the alcoholate is chosen from amongst those derived from compounds of general formula:

R - O - R'OH

in which R and R' denote hydrocarbon groups.

**6.** Process according to Claim 5, characterised in that the alcoholate is chosen from amongst alkoxy alcoholates.

**7.** Process according to any one of Claims 1 to 6, characterised in that, in order to hydrolyse the metal alcoholate, an organic solution of water is poured into an organic solution of the metal alcoholate.

**8.** Process according to Claim 7, characterised in that the organic solution of the metal alcoholate is an alcoholic solution.

**9.** Process according to Claim 8, characterised in that, in order to employ the alcoholic solution of the alcoholate, an alcoholate derived from an alcohol the pKa of which is greater than 15.74 is dissolved in an alcohol the pKa of which is less than 15.74.

**10.** Process according to Claim 9, characterised in that the alcohol the pKa of which is less than 15.74 is chosen from amongst the ether-alcohols of general formula:

R - O - R'OH

in which R and R' denote hydrocarbon groups.

**11.** Process according to Claim 10, characterised in that an ether-alcohol in which the groups R and R' are saturated aliphatic groups is chosen and the alcohol the pKa of which is greater than 15.74 is chosen from amongst saturated aliphatic alcohols.

**12.** Process according to any one of Claims 9 to 11, characterised in that an organic solution of water is prepared, an alcoholate derived from an alcohol the pKa of which is greater than 15.74 is dissolved in an alcohol the pKa of which is less than 15.74, and the organic solution of water is poured into the alcoholic solution of the alcoholate.

**13.** Process according to any one of Claims 1 to 12, characterised in that the hydrolysis is carried out with water containing between 0 and 0.0005 mol of an inorganic acid per mol of water.

**Patentansprüche**

1. Verfahren zur Herstellung von glasartigen Metalloxiden, gemäß dem man ein metallisches Alkoholat hydrolysiert, um ein Gel zu bilden, dadurch gekennzeichnet, daß man ein von einem Alkohol, dessen pKa kleiner als 15,74 ist, abgeleitetes Alkoholat einsetzt und die Hydrolyse mit einem wässrigen Medium, dessen pH größer als 1,5 ist, durchführt.

2. Verfahren nach Anspruch 1, dadurch gekennzeichnet, daß man ein von einem Alkohol, dessen pKa-Wert höchstens gleich 15,25 ist, abgeleitetes Alkoholat einsetzt und die Hydrolyse mit einem wässrigen Medium, dessen pK wenigstens gleich 2 ist, durchführt.

3. Verfahren nach Anspruch 2, dadurch gekennzeichnet, daß man ein von einem Alkohol, dessen pKa zwischen 12 und 15 liegt, abgeleitetes Alkoholat auswählt.

4. Verfahren nach einem der Ansprüche 1 bis 3, dadurch gekennzeichnet, daß man das metallische Alkoholat aus den Alkoholaten der Metalle der Gruppen III a und b und IV a und b der Tabelle des periodischen Systems (die von Chemical Abstracts angenommene, amerikanische Version) auswählt.

5. Verfahren nach einem der Ansprüche 1 bis 4, dadurch gekennzeichnet, daß man das Alkoholat unter den Derivaten von Verbindungen der allgemeinen Formel:

R - O - R'OH,

auswählt, bei der R und R' Kohlenwasserstoffgruppierungen bezeichnen.

6. Verfahren nach Anspruch 5, dadurch gekennzeichnet, daß man das Alkoholat unter den Alkoxyalkoholaten auswählt.

7. Verfahren nach einem der Ansprüche 1 bis 6, dadurch gekennzeichnet, daß man, um das metallische Alkoholat zu hydrolysieren, eine organische Lösung von Wasser in eine organische Lösung des metallischen Alkoholats gießt.

8. Verfahren nach Anspruch 7, dadurch gekennzeichnet, daß die organische Lösung des metallischen Alkoholats eine alkoholische Lösung ist.

9. Verfahren nach Anspruch 8, dadurch gekennzeichnet, daß man zur Verwendung der alkoholischen Lösung des Alkoholats, in einem Alkohol, dessen pKa kleiner als 15,74 ist, ein von einem Alkohol, dessen pKa größer als 15,74 ist, abgeleitetes Alkoholat auflöst.

10. Verfahren nach Anspruch 9, dadurch gekennzeichnet, daß der Alkohol, dessen pKa kleiner als 15,74 ist, ausgewählt ist unter den Ether-Alkoholen der allgemeinen Formel:

R - O - R'OH

in der R und R' Kohlenwasserstoffgruppierungen bezeichnen.

11. Verfahren nach Anspruch 10, dadurch gekennzeichnet, daß man einen Ether-Alkohol auswählt, bei dem die Gruppierungen R und R' aliphatische, gesättigte Gruppierungen sind und man den Alkohol, dessen pKa größer als 15,74 ist, unter den aliphatischen, gesättigten Alkoholen auswählt.

12. Verfahren nach einem der Ansprüche 9 bis 11, dadurch gekennzeichnet, daß man eine organische Lösung von Wasser herstellt, man in einem Alkohol, dessen pKa kleiner als 15,74 ist, ein von einem Alkohol, dessen pKa größer als 15,74 ist, abgeleitetes Alkoholat auflöst und man die organische Lösung von Wasser in die alkoholische Lösung des Alkoholats gießt.

13. Verfahren nach einem der Ansprüche 1 bis 12, dadurch gekennzeichnet, daß man die Hydrolyse mit Wasser durchführt, das zwischen 0 und 0,0005 Mol Mineralsäure pro Mol Wasser enthält.